Europäisches Patentamt

European Patent Office

Office européen des brevets

(19)

(11) EP 0 844 213 A1

(12) # EUROPEAN PATENT APPLICATION

(43) Date of publication:
27.05.1998 Bulletin 1998/22

(51) Int Cl.$^6$: **C01F 11/18**, C09C 1/02, D21H 19/38

(21) Application number: 97309217.4

(22) Date of filing: 17.11.1997

(84) Designated Contracting States:
AT BE CH DE DK ES FI FR GB GR IE IT LI LU MC NL PT SE
Designated Extension States:
AL LT LV MK RO SI

(30) Priority: 20.11.1996 GB 9624085

(71) Applicant: ECC INTERNATIONAL LIMITED
Theale, Reading, Berkshire RG7 4SA (GB)

(72) Inventors:
• Skuse, David Robert
St Austell, Cornwall, PL25 4DJ (GB)

• Mortimer, Mark Daniel
St Austell, Cornwall, PL25 4DJ (GB)
• Bleakley, Ian Stuart
St Austell, Cornwall, PL25 4DJ (GB)
• Mogridge, David James
St Austell, Cornwall, PL25 4DJ (GB)
• Golley, Christopher Robin Langdon
St Austell, Cornwall, PL25 4DJ (GB)

(74) Representative: McCormack, Derek James
ECC International Ltd,
Patents Department,
c/o John Keay House
St Austell, Cornwall PL25 4DJ (GB)

(54) **Precipitates and their production**

(57)     A method of producing a precipitate of an alkaline earth metal compound which comprises applying to a suspension in an aqueous medium of a particulate solid material which at least partially dissolves in the aqueous medium to provide a source of ions of the alkaline earth metal and adding to the suspension a reagent which reacts with the said ions of the alkaline earth metal to form the said precipitate, and characterised in that the particulate solid material is present in a concentration of at least 35% by weight of the suspension and that a dispersing agent is present in the said aqueous medium in an amount sufficient to provide substantial dispersion therein of the particles of the said particulate solid material, wherein the said precipitation is carried out with the particulate solid material dispersed by the dispersing agent.

## Description

The present invention relates to methods of producing precipitates, especially precipitates of alkaline earth metal compounds, and precipitates produced thereby.

Precipitates of alkaline earth metal compounds are well known and widely used in industry. For example, precipitated calcium carbonate (pcc) provides a white particulate pigment, filler or extender material useful in a variety of applications.

Precipitates of alkaline earth metal compounds are conventionally formed in a suspension which contains no more than about 20% by weight solids. Such precipitates are sometimes required to be used in a more concentrated form. Such a form is also desirable when the precipitate is to be stored or transported. Conventionally, in order to provide the precipitate in a more concentrated form it is necessary to treat the suspension by a dewatering step and such steps are time and energy consuming and costly.

According to the present invention in a first aspect there is provided a method of producing a precipitate of an alkaline earth metal compound which comprises applying to a suspension in an aqueous medium of a particulate solid material which at least partially dissolves in the aqueous medium to provide a source of ions of the alkaline earth metal and adding to the suspension a reagent which reacts with the said ions of the alkaline earth metal to form the said precipitate, and characterised in that the particulate solid material is present in a concentration of at least 35 per cent by weight of the suspension and that a dispersing agent is present in the said aqueous medium in an amount sufficient to provide substantial dispersion therein of the particles of the said particulate solid material, wherein the said precipitation is carried out in the aqueous medium with the particulate solid material dispersed by the dispersing agent.

Preferably, the dispersing agent is added to the aqueous medium prior to addition thereto of the said particulate solid material although the dispersing agent may be added during or after addition of the solid particulate material.

Preferably, the solids content of the said particulate solid material in the aqueous medium is at least 40% by weight, desirably at least 50% by weight, when the precipitation is begun. The alkaline earth metal may comprise calcium. It may alternatively or in addition comprise magnesium or barium.

The said reagent may comprise a source of carbonate ions although it could alternatively or in addition comprise a source of sulphate, silicate or phosphate ions. The said reagent may conveniently comprise carbon dioxide.

Preferably, the said precipitate is a pcc. The said particulate solid material may comprise calcium hydroxide.

We have found surprisingly and beneficially that the required precipitate may be formed in the said aqueous medium in the presence of a substantial amount of dispersing agent, eg. one of the agents described herein. In order to provide a finely divided suspension of a particulate solid material in an aqueous medium at high solids levels (compared with those conventionally employed), eg. solids levels of at least 35% of the said particulate solids material by weight, it may be desirable to employ a dispersing agent. We have found that the present invention allows the said particulate solid material to be utilised at high solids levels in the aqueous medium in the method according to the present invention by dispersing the particulate solid material in the aqueous suspension to permit efficient dissolution of the alkaline earth metal ions and carrying out the precipitate-forming reaction in the aqueous medium in the presence of the dispersing agent. Thus, the present invention allows precipitates, eg. pcc, to be produced in an aqueous medium in a high solids concentration and this beneficially reduces the energy demand and cost of subsequent dewatering of such products.

Efficient dispersion and dissolution of the alkaline earth metal ions may also be assisted by agitation, eg. by stirring of the aqueous suspension, to provide uniform distribution of the particulate solid material.

It may be desirable to produce the precipitate formed in the aqueous medium, herein called the "precipitate product", in the form of a dispersed suspension of the precipitate product. The dispersing agent employed to disperse the said particulate solid material (which provides a source of alkaline earth metal ions) may also serve to disperse the precipitate product when formed. This may be achieved without addition of dispersing agent following addition of that employed to disperse the said particulate solid material prior to the precipitation reaction. However, additional dispersing agent may be added, if required, in one or more additions during or after the formation of the precipitate product by the precipitation reaction. The additional dispersing agent may be the same as or different from that first employed to disperse the said particulate solid material.

The precipitate product when formed may comprise at least 40% by weight, in some cases at least 50% by weight, of the suspension of the precipitate product in the aqueous medium.

USP 5,275,650 describes the use of dispersing agents to disperse coarse lime (calcium hydroxide) in a process for grinding lime. Use of dispersed lime in a process to produce pcc in high solids in accordance with an embodiment of the present invention is however not suggested by this published reference. The lime produced in the method of USP 5,275,650 is described for other specialist applications. It is noted that lime is sparingly soluble in water but after the solubility level of the lime has been reached the amount of the lime present as solids in the process described in USP 5,275,650 remains substantially constant. In contrast, in a precipitation reaction to form pcc, the lime in solution is continuously consumed by addition of the carbonate reagent, eg. carbon dioxide, and this causes the amount of lime present as solids to fall continuously by dissolution until all of the solid lime has been consumed.

Surprisingly, in an embodiment of the present invention, the dispersing agent present to disperse the lime disperses the pcc product as it is formed.

In the method according to the first aspect of the present invention the dispersing agent employed to disperse the said particulate solid material may be added in an amount of up to 5% by weight, desirably in the range 0.1% to 2.5%, especially 0.5% to 2.1%, by weight, based upon the dry weight when first added to the aqueous medium, of the particulate solid. The dispersing agent may be added in one addition or in a sequence of incremental additions or as a continuous addition as appropriate.

The dispersing agent employed to disperse the particulate solid material and subsequently to disperse the precipitate product in the method according to the present invention may be one or more dispersing agents known to those skilled in the art for the dispersion of fine inorganic particulate materials in aqueous media. For example, the dispersing agent may comprise an anionic polyelectrolyte selected from one of the materials known in the art. Thus, the dispersing agent may comprise a polycarboxylate which may be a homopolymer or copolymer which contains a monomer unit comprising a vinyl or olefinic group which is substituted with at least one carboxylic acid group, or a water soluble salt thereof. Examples of suitable monomers are acrylic acid, methacrylic acid, itaconic acid, crotonic acid, fumaric acid, maleic acid, maleic anhydride, isocrotonic acid, undecylenic acid, angelic acid and hydroxyacrylic acid. The number average molecular weight of the polycarboxylate dispersing agent should not be greater than 20,000, and preferably in the range of from 700 to 10,000 as measured by gel permeation chromatography using a low angle laser light scattering detector.

The dispersing agent may in addition include a cationic agent, eg. a poly(diallyldialkyl) ammonium salt to render the particles of the precipitate product, eg. after treatment by an anionic agent, cationic. Alternatively, the dispersing agent may comprise one of the surfactants previously employed as dispersing agents in the art. The surfactant may comprise a non-ionic, anionic or cationic surfactant.

The precipitate product formed in the method according to the first aspect of the present invention may be further processed for example by subjecting the precipitate-containing suspension to comminution, eg. by light milling or by attrition grinding with an attrition grinding medium.

As described in Applicant's EP 768,344A the comminution step where attrition grinding may be carried out such as to dissipate in the suspension in which the precipitate is formed at least 100 kilowatt hours of energy per dry tonne of precipitate. The dissipated energy may be 200 kW/hr or more per tonne.

The grinding medium employed in the comminution step where a grinding step may comprise one of the hard, inorganic materials well known in the grinding of particulate materials. For example, silica sand having a median particle diameter in the range from about 0.1 mm to 4 mm, eg. 0.2 mm to 2 mm, is a preferred grinding medium. The grinding medium could alternatively be aluminium oxide, zirconium oxide, hard steel or a mixture of any of these materials.

The aqueous medium in which the particulate solid material is incorporated in the method according to the first aspect of the present invention may be water or it may be an aqueous solution containing chemicals of a kind known for use in pcc production, eg. it may comprise a buffer solution to give the product acid tolerance. The water or aqueous solution may contain fine suspended solid material in addition to the said particulate solid material. For example, there may be present fibres such as cellulose fibres of the kind used in paper making and/or particles or microfibres which are known in the art at "fines" from a paper making process or a waste paper treatment or de-inking process as described in Applicants' EP 604,095. Alternatively, residue from an incineration process, eg. incineration of paper de-inking waste may be present as described in Applicants' WO 96/32354. Where such other solid materials are in the treated suspension they may be present in an amount of up to 10% by weight, eg. 1% to 5% by weight, of the aqueous suspension of water and non-reacting solids present. The non-reacting solids may constitute less than 50% by weight, eg. less than 20% by weight, in most cases less than 10% by weight of the solids present in the aqueous medium prior to precipitation. As described in the aforementioned EP 604,095 and WO 96/32354 the particles or fibres of such solids become entrained in the aggregate of precipitate crystals formed. The precipitate product so formed is still useful in the applications described below.

It is possible that the aqueous medium to be treated prior to addition of the dispersing agent contains trace quantities of chemicals used as dispersing agent in previous processes, eg. where the aqueous medium comprises effluent from a process such as a paper making process. In this case, the level of dispersing agent already present will be insufficient to provide effective dispersion of the particles of the said added particulate solid material, eg. lime. For example, the level of such trace dispersing agent will be much less than 0.1% by weight and addition of dispersing agent as described will be necessary to provide effective dispersion of the said added particulate solid material.

It is desirable that in the method according to the first aspect of the present invention the suspension should be agitated while the said reagent is added in order to ensure an even distribution of the precipitate product being formed. Stirring may be continued, if desired, during the precipitation reaction.

It is preferred to add the source of alkaline earth metal ions followed by the said reagent, eg. source of carbonate ions, to the aqueous medium although in principle the two could be added together.

The source of alkaline earth metal ions is conveniently the alkaline earth metal hydroxide (known as milk of lime when the alkaline earth metal is calcium), but it may alternatively be a watersoluble alkaline earth metal salt, for example the chloride or nitrate. The alkaline earth metal hydroxide may be added to the aqueous medium already prepared, or may alternatively be prepared in situ, for example by slaking an alkaline earth metal oxide (eg. quicklime, when an aqueous suspension of calcium hydroxide is desired) in the medium.

The source of carbonate ions is conveniently carbon dioxide gas which is introduced into the suspension containing the source of alkaline earth metal ions. The carbon dioxide gas may be substantially pure as commercially supplied in gas cylinder or may be present in a mixture of spent gases such as flue gases.

Alternatively, the source of carbonate ions may be an alkali metal carbonate or ammonium carbonate. Sodium carbonate is convenient on account of its relative cheapness and availability.

The temperature at which the reagent is added to the aqueous suspension containing the said solid particulate material is preferably in the range 20°C to 60°C. The reaction to form the precipitate may be carried out in a conventional reaction vessel, eg. made of stainless steel.

As described in our copending EP 768,344A, when the precipitate product is subjected to a comminution step the pH of the aqueous suspension being treated may rise, eg. to pH 11 or more, as free basic material, eg. unconverted lime where lime is used as the said particulate solid material, entrapped in the crystalline aggregates comprising the precipitate product is released by the comminution. Such a pH level is undesirable in the applications in which the precipitate may be employed, as described hereinafter, because it is potentially harmful to machinery and to operators who have to process the suspension.

Desirably, an additional step to reduce the pH of the aqueous precipitate-containing suspension is applied after a comminution step. The additional step may be applied until the pH falls to a suitable level, eg. below pH 9 preferably to or below pH 7.5. The additional step may comprise further treatment by carbonation of the precipitate-containing suspension. Alternatively, or in addition, a material known for use in reducing the pH of a mineral suspension may be added. Such a material may, for example, comprise a mild mineral acid such as phosphoric acid.

Desirably, the suspension formed after precipitation and any optional communion and pH reduction steps is suitable for use without further dewatering. However, some dewatering may be applied as appropriate at some stage following production of the precipitate product and, where it is required to dewater, the extent of dewatering will advantageously be less than for comparable (more dilute) precipitate suspensions produced as in the prior art.

The precipitate product, eg. pcc, formed by the method according to the present invention may be used in any of the known applications for such products.

For example, the precipitate product may be employed to provide a white particulate pigment, extender or filler material for incorporation in paper product or paper coating compositions, paints, polymers, ceramic articles and the like. The precipitate product may be especially suitable for use in paper coating compositions.

According to a second aspect of the present invention there is provided a precipitate product produced by the method of the first aspect.

A preferred form of precipitate product according to the second aspect of the present invention has a particle size distribution such that at least 70% by weight and desirably at least 90% by weight of the precipitate particles have an equivalent spherical diameter (as measured by sedimentation) of less than 1 micrometre. Desirably, at least 50% by weight (based on the dry weight of the product) have an equivalent spherical diameter of less than 0.5 micrometres. A preferred product particle size distribution for the precipitate product is one in which the particle size distribution is such that the percentage by weight of particles have an equivalent spherical diameter (measured by sedimentation) smaller than $1\mu m$, $0.5\mu m$ and $0.25\mu m$, respectively is as follows:

96 to 99 wt% < 1 $\mu m$

50 to 80 wt% < 0.5 $\mu m$

10 to 45 wt% < 0.25 $\mu m$

As described in our EP 768,344A the conditions under which the method according to the first aspect is carried out may be chosen to give predominantly a selected crystal form of the precipitate product.

For example, where the precipitate is a pcc to be employed in paper coating the selected crystal form of the pcc may be a form which is predominantly aragonite although a form which is predominantly calcite of the scalenohedral or rhombohedral habit or shape is also acceptable. The process conditions during the precipitation process required generally to achieve either principally aragonitic or scalenohedral or rhombohedral pcc are known to those skilled in the art.

The pcc form achieved in practice is unlikely to be 100% of the selected form especially where non-reacting solids are present in the aqueous medium. It is quite usual for one crystal form even when predominant to be mixed with other forms. Such mixed forms will generally give suitable product properties. We prefer that at least 50% by weight, desirably at least 80% by weight of the crystals in a pcc product are of the selected form.

The precipitate product in the form of a dispersed aqueous suspension preferably has a viscosity of not more than 500 mPa.s (as measured by a Brookfield Viscometer using a spindle speed of 100 rpm) and is preferably a pumpable and flowable slurry.

The precipitate product according to the second aspect of the present invention may be mixed with other particulate materials known for use in the applications for the product, eg. as mentioned above.

For example, where the precipitate product is to be employed as a pigment material it may be mixed with one or more other pigment materials eg. known materials selected from titanium dioxide, calcined clay, talc, calcium sulphate, kaolin clay, calcined kaolin and precipitate or ground calcium carbonate. A pigment mixture may beneficially include a mixture of the precipitate product and a kaolin clay. Such a pigment mixture may comprise from 5% to 99%, especially 40% to 70%, by weight of the precipitate product. For paper coating applications platey kaolin clay is especially preferred to form the pigment mixture with the precipitate product optionally together with other pigment ingredients by "platey" kaolin clay is meant a kaolin clay having an aspect ratio of at least 20:1, preferably at least 30:1.

A pigment mixture may be formed by mixing aqueous suspensions of each of the required pigments to form an aqueous suspension incorporating the mixture of pigments. Such an aqueous suspension may be a dispersed aqueous suspension and the individual aqueous suspensions of pigments employed to form the mixture may each incorporate a dispersing agent. The dispersing agents employed to disperse the pigments in the individual aqueous suspensions mixed together, and the concentrations of such suspensions, may be the same or different.

According to the present invention in a third aspect there is provided a paper coating composition which comprises an aqueous suspension of a precipitate product according to the second aspect mixed together with an adhesive. The precipitate product employed in the composition may be mixed with one or more pigments as described above. The adhesive may form from 4% to 30% by weight based on the total dry weight of pigment or pigments present. The adhesive may be one of the known paper coating adhesives employed in the art, e.g. chosen from the group consisting of starches, proteinaceous adhesives such as casein and latices of, for example, styrene butadiene rubbers and acrylic polymers.

The paper coating composition according to the third aspect may also include one or more optional additives (additional to the dispersing agent) conventionally used in paper coating compositions, eg. a thickener, e.g. in an amount of up to 2% by weight based upon the total dry weight of pigment or pigments present. The thickener may comprise one or more substances employed as thickeners in the prior art, e.g. sodium carboxymethyl cellulose or synthetic acrylic thickeners. The composition may include one or other known additives in minor amounts (less than 10% desirably less than 5% by weight in total) eg. selected from cross linkers, water retention aids, lubricity/calendering aids, antifoamers, defoamers, dry or wet pick improvement additives, dry or wet rub improvement and abrasion resistance additives, gloss-ink hold-out additives, optical brightening agents, levelling and evening aids, grease and oil resistance additives, water resistance additives and insolubilisers.

The paper coating composition according to the third aspect may be formed by mixing together an aqueous dispersed suspension according to the third aspect, optionally with one or more further aqueous dispersed suspensions containing other pigments, with the adhesive and any other optional constituents e.g. thickener, in a manner familiar to those skilled in the art.

Such coating compositions may be applied to a base paper or other layer to be coated in a known manner, eg. using a commercially available coating machine.

We have found that paper coating compositions according to the third aspect when applied to woodfree paper or board, especially as a topcoat on a precoated base substrate can give good sheet gloss, print gloss and brightness.

Embodiments of the present invention will now be described by way of example only with reference to the following Examples.

## EXAMPLE 1

A dispersed slurry of calcium hydroxide obtained in dry form from BDH Chemicals Ltd was prepared at 50.3 weight % solids using as dispersing agent 1.5% by weight based on the dry weight of calcium hydroxide of sodium polyacrylate supplied under the trade name Dispex N40 by Allied Colloids Ltd. The viscosity was measured as 105 mPa.s. A gaseous mixture of carbon dioxide and air in a volume ratio of 1:3 was bubbled through the suspension whilst the suspension was vigorously stirred. The rate of application of the gaseous mixture was 0.003 mole carbon dioxide/mol calcium hydroxide/minute. The temperature was maintained at 45°C throughout. After the pH had fallen to pH 7 the solids content of the precipitate-containing suspension formed was measured and found to be 55.7% by weight. Residual lime content was measured and was found to form 1.2% by weight of the suspension, the remainder being calcium carbonate. The suspension formed had a viscosity of 520 mPa.s. The pcc product was found by SEM microphotography to contain an aggregate of mixed crystal forms. The optical properties of the product were measured and found to be suitable for use in the aforementioned applications.

**EXAMPLE 2**

A slurry was made up by dissolving 300 g of Dispex N40 (40% active) in 11,000 ml water, and slowly adding 4300 g of calcium oxide. This gave a dose of dispersing agent of 2.1% by weight based on the dry weight of calcium hydroxide. The solids concentration appeared to be the practical limit before the slurry became too thick for further addition. The slurry was stirred for 16 hours (overnight) while cooling, then screened through a 300 micron sieve. Viscosity (Brookfield 100 rpm) was 140 mPas. The solids content was 40 wt%. This equates to 7 moles of calcium hydroxide per litre of slurry.

A total of 8 litres of slurry was put into a carbonating vessel, and a mixture of 3:1 air:carbon dioxide was bubbled through the slurry at a rate such that a molar amount of carbon dioxide equal to that of calcium hydroxide in the slurry would pass through the slurry in 100 minutes (0.01 moles of carbon dioxide per mole of calcium hydroxide per minute). The rate of addition of carbon dioxide was slowed after a few minutes to prevent the slurry becoming too thick. The time of reaction was 208 minutes to achieve pH 7 (rate = 0.048 moles of carbon dioxide per mole of calcium hydroxide per minute).

The solids content of the final PCC slurry produced was 45 wt%. This product was suitable (after light comminution to break down particle aggregates formed) for use in the paper coating application described above.

**Claims**

1. A method of producing a precipitate of an alkaline earth metal compound which comprises applying to a suspension in an aqueous medium of a particulate solid material which at least partially dissolves in the aqueous medium to provide a source of ions of the alkaline earth metal and adding to the suspension a reagent which reacts with the said ions of the alkaline earth metal to form the said precipitate, and characterised in that the particulate solid material is present in a concentration of at least 35% by weight of the suspension and that a dispersing agent is present in the said aqueous medium in an amount sufficient to provide substantial dispersion therein of the particles of the said particulate solid material, wherein the said precipitation is carried out with the particulate solid material dispersed by the dispersing agent.

2. A method as claimed in claim 1 and wherein the alkaline earth metal comprises calcium and the said reagent comprises a source of carbonate ions, the said precipitate comprising calcium carbonate.

3. A method as claimed in claim 1 or claim 2 and wherein the particulate solid material comprises calcium hydroxide.

4. A method as claimed in claim 1, claim 2 or claim 3 and wherein the said reagent comprises carbon dioxide.

5. A method as claimed in any one of claims 1 to 4 and wherein the said particulate solid material when added to the aqueous medium forms at least 50% by weight of the suspension in the aqueous medium.

6. A method as claimed in any one of claims 1 to 5 and wherein the precipitate when produced forms at least 40% by weight of the aqueous suspension containing it.

7. A method as claimed in any one of claims 1 to 6 and wherein the dispersing agent is present in the aqueous medium in an amount of from 0.1% to 5% by weight based on the dry weight of the said solid particulate material when first added to the aqueous medium.

8. A method as claimed in any one of the preceding claims and wherein the dispersing agent comprises a polyacrylate homopolymer or copolymer.

9. A method as claimed in any one of the preceding claims and wherein the aqueous medium contains up to 10% by weight based on the overall weight of the suspension of non-reacting solids which bond to and/or become entrained in the precipitate when formed.

10. A method as claimed in any one of the preceding claims and wherein the precipitate in the aqueous suspension containing it is further treated by medium attrition grinding.

11. A method as claimed in claim 10 and wherein the aqueous suspension is treated to reduce its pH.

12. A precipitate which is the product of the method claimed in any one of the preceding claims.

13. Use of the precipitate claimed in claim 12 in the coating of paper or like products.

**European Patent Office**

**EUROPEAN SEARCH REPORT**

Application Number

EP 97 30 9217

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 055 088 A (PFIZER) 30 June 1982<br>* page 2, line 17 - page 3, line 10 * | 1-4,7 | C01F11/18<br>C09C1/02<br>D21H19/38 |
| X | * page 7, line 1-3 * | 10 | |
| X | * page 6, line 19-34 *<br>--- | 11,12 | |
| X | US 4 242 318 A (BRAHM JACQUES ET AL) 30 December 1980<br>* column 2, line 59 - column 3, line 5 * | 1-4 | |
| X | * column 4, line 57 - line 63 * | 6 | |
| X | * column 3, line 15 - line 26 * | 7 | |
| X | * column 2, line 37 - line 46 *<br>--- | 8 | |
| X | EP 0 323 697 A (PFIZER) 12 July 1989<br>* page 2, line 22 - line 40 * | 1-4 | |
| X | * abstract *<br>--- | 12 | |
| X | DE 26 00 485 A (VAW VER ALUMINIUM WERKE AG) 21 July 1977<br>* page 8, line 6 - 11 * | 12,13 | |
| A | * example 1 ; example 2 ; claim 9 *<br>--- | 1-4,7 | TECHNICAL FIELDS SEARCHED (Int.Cl.6) |
| X | US 5 082 887 A (BROWN ALAN J ET AL) 21 January 1992 | 12,13 | C01F<br>C09C<br>D21H |
| A | * abstract * | 1-4,8 | |
| A | * example 2 *<br>--- | 6 | |
| A | CHEMICAL ABSTRACTS, vol. 107, no. 18, 2 November 1987<br>Columbus, Ohio, US;<br>abstract no. 157674,<br>MORISAWA, TAKAO ET AL: "Readily dispersive colloidal calcium carbonate"<br>XP002055527<br>* abstract *<br>& JP 62 171 920 A (TOYO DENKA KOGYO CO., LTD., JAPAN)<br>--- | 1-4,8,<br>10-13 | |

-/--

The present search report has been drawn up for all claims

| Place of search | Date of completion of the search | Examiner |
|---|---|---|
| THE HAGUE | 25 February 1998 | Ross, R |

**European Patent Office**

## EUROPEAN SEARCH REPORT

Application Number

EP 97 30 9217

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | CHEMICAL ABSTRACTS, vol. 101, no. 8, 20 August 1984 Columbus, Ohio, US; abstract no. 60770, KONNO, KIJIRO ET AL: "Preparation of barium carbonate fine particles in W/O microemulsion" XP002055528 * abstract * & NIPPON KAGAKU KAISHI (1984), (6), 815-22 CODEN: NKAKB8;ISSN: 0369-4577, 1984, | 1,4 | |
| | ----- | | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 25 February 1998 | Ross, R |

EPO FORM 1503 03.82 (P04C01)